# EUROPÄISCHE PATENTANMELDUNG

(11) **EP 2 157 673 A2**
(43) Veröffentlichungstag der Anmeldung: **24.02.2010**
(21) Anmeldenummer: 09009905.2
(22) Anmeldetag: 31.07.2009
(51) Int. Cl.: H02G 3/04

(54) **Montagesystem für Raumsäulen und Installationskanäle**

(30) Priorität: 22.08.2008 DE 202008011230 U
(71) Anmelder: Tehalit GmbH, 67716 Heltersberg (DE)
(72) Erfinder: Eberle, Patrick, 66292 Riegelsberg (DE)
(74) Vertreter: Patentanwälte Möll, Bitterich & Dr. Keller

(57) **Zusammenfassung**

Die Erfindung betrifft ein Montagesystem für Raumsäulen und Installationskanäle, umfassend einen Installationskörper (1) und einen Montagefuß (7), auf dem über Befestigungsmittel der Installationskörper (1) montierbar ist. Am Montagefuß (7) befindet sich eine Aufnahme (11), in welche ein an der Fußseite des Installationskörpers (1) ausgebildeter Spreizstift (2) eingesetzt wird, wobei der Spreizstift (2) einen Schlitz (4) aufweist, in dem ein Keil (5) geführt wird, der im Montagezustand die beiden durch den Schlitz (4) getrennten Schenkel (3) des Spreizstiftes (2) so aufspreizt, dass eine kraftschlüssige Verbindung zwischen dem Spreizstift (2) und den Innenwänden der Aufnahme (11) des Montagefußes (7) erreicht wird.

## Beschreibung

Die vorliegende Erfindung betrifft ein Montagesystem für Raumsäulen und Installationskanäle gemäß dem Oberbegriff des Anspruchs 1.

Raumsäulen oder Installationskanäle sind mit Energie- und Versorgungsleitungen bestückt und dienen der Versorgung von Arbeitsplätzen in modernen Büroräumen. Raumsäulen stehen normalerweise auf einem stabilen Montagefuß, der beispielsweise aus schwerem Gusseisen hergestellt ist. Der Installationskörper der Raumsäule und der Montagefuß werden bei bekannten Varianten des Standes der Technik üblicherweise verschraubt. Bei anderen bekannten Befestigungssystemen erfolgt die Verbindung der Raumsäule mit dem Fuß über einen Bajonett-Verschluss. Nachteilig ist bei solchen Systemen, dass für die Montage der Raumsäule und das Aufstellen zumeist zwei Monteure notwendig sind.

Es ist daher Aufgabe der vorliegenden Erfindung, ein Befestigungssystem für Raumsäulen oder Installationskanäle bereit zu stellen, bei der die Montage schnell und effizient durch einen einzigen Monteur erfolgen kann.

Diese Aufgabe wird gelöst durch ein Montagesystem für Raumsäulen und Installationskanäle mit den Merkmalen des Anspruchs 1.

Vorteilhafte Ausführungsformen finden sich in den Unteransprüchen wieder.

Das erfindungsgemäße Montagesystem sieht einen Klemmverschluss zwischen dem Installationskörper der Raumsäule und dem Montagefuß vor. An der Unterseite des Installationskörpers ist ein Spreizstift ausgebildet, in dem ein senkrecht verlaufender Schlitz eingearbeitet ist. In dem Schlitz befindet sich ein Keil, der von oben nach unten in dem Schlitz führbar ist. Durch das Herunterdrücken des Keils werden die beiden äußeren Schenkel des Spreizstiftes nach außen gedrückt. Der Schlitz ist vorzugsweise von oben nach unten verengt, so dass die für den Klemmverschluss notwendigen Spreizwinkel erreicht werden.

Am Montagefuß befindet sich eine zentrale Aufnahme, in welche der Spreizstift des Installationskörpers eingesetzt wird. Zur Verdrehsicherung befinden sich ferner Stifte und dazu kooperierende Ausnehmungen am Montagefuß. Nach dem erfolgten Aufsetzen des Installationskörpers auf dem Montagefuß wird der Keil mit einem Hammerwerkzeug durch den Monteur entlang des Schlitzes nach unten geschlagen, so dass durch Spreizung der Schenkelenden des Spreizstiftes eine kraftschlüssige Verbindung mit der Innenseite der zentralen Aufnahme am Montagefuß erfolgt. Der Installationskörper ist dann fest mit dem Fuß verbunden. Zum Lösen dieser Verbindung wird der Keil mit einem Schlagwerkzeug, z.B. Hammer, nach oben geschlagen. Die Kabel und Leitungen zur Versorgung der Raumsäule werden vom Rand des Montagefußes über Ausnehmungen am Ausleger in die Säule geführt.

Die Oberfläche des Spreizstiftes und/oder die Innenseite der Aufnahme ist vorzugsweise profiliert (z. B. durch Aufrauung), um die Reibungskraft beim Kraftschluss zu erhöhen. Vorzugsweise sind der Stift und die Ausnehmung rund oder konisch.

Die einzelnen Elemente des erfindungsgemäßen Montagesystems sind in einer Variante auch reversibel, d. h. die männlichen Elemente, wie der Spreizstift des Installationskörpers oder die weiblichen Elemente, wie die Aufnahme des Montagefußes können sich auch jeweils am anderen Montageteil befinden, soweit dies zweckmäßig ist.

Bevorzugt ist der Montagefuß ringförmig ausgestaltet und besitzt einen nach Innen weisenden zentralen Ausleger. Am Ende des Auslegers sind die einzelnen Befestigungselemente zentriert angeordnet.

Das erfindungsgemäße Montagesystem ermöglicht einen lösbaren Aufbau einer Raumsäule bzw. Installationskanals durch einen einzigen Monteur.

Die Erfindung wird in der nachfolgenden Zeichnung näher erläutert.

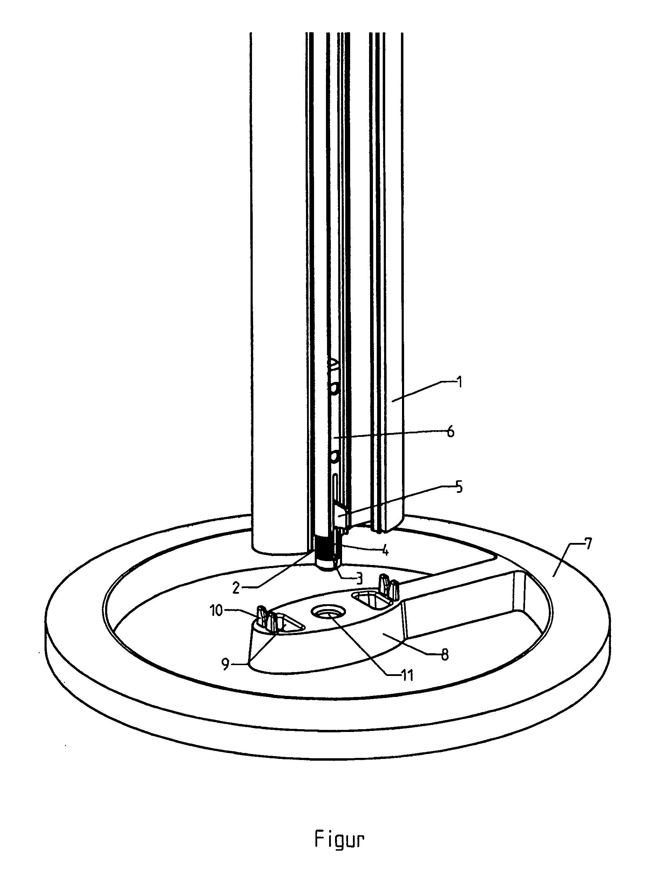

In der Figur erkennt man einen ringförmigen Montagefuß 7 mit einem nach innen weisenden Ausleger 8, an dessen Ende sich die einzelnen Befestigungselemente des erfindungsgemäßen Montagesystems befinden. Man erkennt eine Aufnahme 11, in welche ein am Installationskörper 1 ausgebildeter Spreizstift 2 beim Aufstellen der Raumsäule hineingeführt wird. Der Spreizstift 2 weist einen zentralen Schlitz 4 auf, in dem ein Keil 5 geführt wird. Nach dem erfolgten Aufsetzen des Installationskörpers 1 auf den Montagefuß 7 wird der Keil 5 mit einem Hammerwerkzeug nach unten geschlagen, so dass sich die beiden Schenkel 3 des Spreizstiftes 2 aufspreizen und einen Kraftschluss mit der Innenseite der Aufnahme 11 des Montagefuß 7 bewirken. In der gezeigten Ausführungsform ist die Oberfläche des Spreizstiftes 2 aufgeraut (profiliert), um den Reibverschluss bei der Verbindung zu erhöhen.

Zur Verdrehsicherung des Installationskörpers 1 befinden sich an dem Ausleger 8 des Montagefußes 7 mehrere Stifte 10, welche in entsprechende Öffnungen am Installationskörper 1 greifen. Jeweils zwei Stifte 10 sind gegenüberliegend in Reihe angeordnet. Die Form der Auslegerplatte entspricht der des Installationskörpers 1 und ist in der gezeigten Ausführungsform oval. Ferner erkennt man Ausnehmungen 9, welche zur Einführung von Kabel und Versorgungsleitungen in die Säule dienen. Die Kabel werden an der Unterseite des Auslegers 8 bis zum äußeren Ring des Montagefußes 7 geführt, von wo aus sie an die externen Anschlüsse geführt werden. Der Spreizstift 2 ist vorzugsweise in einer Profilrinne 6 des Installationskörpers 1 integriert.

## Patentansprüche

1. Montagesystem für Raumsäulen und Installationskanäle, umfassend
- einen Installationskörper (1),
- einen Montagefuß (7), auf dem über Befestigungsmittel der Installationskörper (1) montierbar ist, **dadurch gekennzeichnet, dass** sich am Montagefuß (7) eine Aufnahme (11) befindet, in welche ein an der Fußseite des Installationskörpers (1) ausgebildeter Spreizstift (2) eingesetzt wird, wobei der Spreizstift (2) einen Schlitz (4) aufweist, in dem ein Keil (5) geführt wird, der im Montagezustand die beiden durch den Schlitz (4) getrennten Schenkel (3) des Spreizstiftes (2) so aufspreizt, dass eine kraftschlüssige Verbindung zwischen dem Spreizstift (2) und den Innenwänden der Aufnahme (11) des Montagefußes (7) erreicht wird.

2. Montagesystem nach Anspruch 1, **dadurch gekennzeichnet, dass** die Oberfläche des Spreizstiftes (2) und/oder die Innenseite der Aufnahme (11) profiliert ist.

3. Montagesystem nach Anspruch 1 oder 2, **dadurch gekennzeichnet, dass** der Schlitz (4) von oben nach unten verengt ist.

4. Montagesystem nach einem der Ansprüche 1 bis 3, **dadurch gekennzeichnet, dass** sich am Montagefuß (7) ferner Stifte (10) und an der Unterseite des Installationskörpers (1) entsprechende Ausnehmungen befinden, um ein Verdrehen des Installationskörpers (1) zu vermeiden.

5. Montagesystem nach einem der Ansprüche 1 bis 4, **dadurch gekennzeichnet, dass** der Montagefuß (7) ringförmig ist und einen zentralen nach Innen weisenden Ausleger (8) besitzt.

6. Montagesystem nach Anspruch 5, **dadurch gekennzeichnet, dass** sich am Ausleger (8) Ausnehmungen (9) befinden, durch welche Kabel und Versorgungsleitungen geführt werden.

7. Montagesystem nach einem der Ansprüche 1 bis 6, **dadurch gekennzeichnet, dass** der Montagefuß (7) ringförmig ist.

8. Montagesystem nach einem der Ansprüche 1 bis 7, **dadurch gekennzeichnet, dass** der Spreizstift (2) und die Aufnahme (11) rund oder konisch ausgebildet sind.

9. Montagesystem nach einem der Ansprüche 1 bis 8, **dadurch gekennzeichnet, dass** die männlichen und weiblichen Elemente des Installationskörpers (1) und des Montagefußes (7) vertauscht sind.

10. Raum- oder Installationssäule, umfassend ein Montagesystem nach einem der Ansprüche 1 bis 9.
